# EUROPÄISCHE PATENTANMELDUNG

(11) **EP 2 123 940 A1**
(43) Veröffentlichungstag der Anmeldung: **25.11.2009**
(21) Anmeldenummer: 09155824.7
(22) Anmeldetag: 23.03.2009
(51) Int. Cl.: F16H 37/04, F16H 61/04, F16H 61/70, F16H 3/00

(54) **Mehrgruppengetriebe eines Kraftfahrzeuges**

(30) Priorität: 06.05.2008 DE 102008001564
(71) Anmelder: ZF Friedrichshafen AG, 88038 Friedrichshafen (DE)
(72) Erfinder: Dittrich, Alan, 78464 Konstanz (DE); Hoffmann, Rayk, 88048 Friedrichshafen (DE)

(57) **Zusammenfassung**

Die Erfindung betrifft ein Mehrgruppengetriebe eines Kraftfahrzeuges und ein Verfahren zu dessen Betrieb, mit wenigstens zwei in einem Antriebsstrang angeordneten Getriebegruppen (2,2',3,3'), bei dem Mittel zur Zugkraftunterstützung bei Gangwechseln vorgesehen sind. Um zugkrafterhaltende Gangwechsel zu ermöglichen, sind an einer Vorschaltgruppe (2,2') mit einer ersten, einem Antriebsmotor zugewandten Gangkonstanten (iₖ₁) und einer zweiten, einer Hauptgruppe (3,3') zugewanden Gangkonstanten (iₖ₂) zwei Lastschaltkupplungen (5,5',7,7') und eine Zwischengangkupplung (16,16') angeordnet, wobei die erste Lastschaltkupplung (5,5') eingangsseitig mit einer Antriebswelle (6) des Antriebsmotors und ausgangsseitig mit einem Losrad (11) der ersten Gangkonstanten (iₖ₁) verbunden ist, die zweite Lastschaltkupplung (7,7') eingangsseitig mit der Antriebswelle (6) und ausgangsseitig mit einem Losrad (14) der zweiten Gangkonstanten (iₖ₂) verbunden ist, und die Zwischengangkupplung (16,16') eingangsseitig mit dem Losrad (14) der zweiten Gangkonstanten (iₖ₂) und ausgangsseitig mit einer mit einer Getriebeabtriebswelle (36) zumindest wirkverbundenen Getriebehauptwelle (30) der Hauptgruppe (3,3') verbunden ist, wobei über die Zwischengangkupplung (16,16') in Wirkverbindung mit wenigstens der zweiten Lastschaltkupplung (7,7') ein Direktgang als ein Zwischengang schaltbar ist, und über die erste und die zweite Lastschaltkupplung (5,5',7,7') die Gangkonstanten (iₖ₁,iₖ₂) der Vorschaltgruppe (2,2') lastschaltbar sind.

## Beschreibung

Die Erfindung betrifft ein Mehrgruppengetriebe eines Kraftfahrzeuges und ein Verfahren zum Betrieb eines Mehrgruppengetriebes eines Kraftfahrzeuges gemäß dem Oberbegriff des Patentanspruchs 1 bzw. dem Oberbegriff des Patentanspruchs 8.

Mehrgruppengetriebe bestehen aus zwei oder mehr meist seriell angeordneten Getriebegruppen, durch deren Kombination eine hohe Gangzahl realisierbar ist. Zunehmend werden sie als automatisierte Schaltgetriebe, beispielsweise bestehend aus einer Eingangsgruppe, einer Hauptgruppe und einer Nachschaltgruppe konzipiert. Derartige Getriebe finden insbesondere in Nutzfahrzeugen Anwendung, da sie eine besonders feine Gangabstufung mit beispielsweise 12 oder 16 Gängen bieten und einen hohen Wirkungsgrad aufweisen. Bei einer geringeren Gangzahl sind auch Konfigurationen lediglich aus einer Hauptgruppe und einer Eingangsgruppe oder einer Hauptgruppe und einer Nachschaltgruppe möglich. Zudem zeichnen sie sich im Vergleich zu manuellen Schaltgetrieben durch einen hohen Bedienungskomfort aus und sind im Vergleich zu Automatgetrieben besonders wirtschaftlich in den Herstellungs- und Betriebskosten.

Bauartbedingt unterliegen herkömmliche Mehrgruppen-Schaltgetriebe, wie alle nicht unter Last schaltenden manuellen oder automatisierten Schaltgetriebe, einer Zugkraftunterbrechung beim Gangwechsel, da stets der Kraftfluss vom Antriebsmotor durch Öffnen einer Kupplung unterbrochen wird, um den eingelegten Gang lastfrei auszulegen, in einer Neutralstellung Getriebe und Antriebsmotor auf eine Anschlussdrehzahl zu synchronisieren und den Zielgang einzulegen. Durch das Rollen des Fahrzeuges während der Zugkraftunterbrechung können unerwünschte Geschwindigkeitserhöhungen oder Geschwindigkeitsverluste auftreten. Zudem kann ein erhöhter Kraftstoffverbrauch entstehen. Während sich die Zugkraftunterbrechungen bei Personenkraftfahrzeugen durch Einbußen der Fahrdynamik in der Regel eher nur störend auswirken, beispielsweise bei einer sportlich orientierten Fahrweise beim Hochschalten, kann sich bei schweren Nutzfahrzeugen die Fahrgeschwindigkeit derart verzögern, dass ein Hochschalten unmöglich wird und es an Steigungen zu unerwünschten Rückschaltvorgängen, Kriechfahrten oder sogar zu zusätzlichen Anfahrvorgängen kommt.

Aus der DE 10 2006 024 370 A1 der Anmelderin ist ein zugkraftunterstütztes automatisiertes Mehrgruppengetriebe mit einer Splittergruppe als Eingangs- oder Vorschaltgetriebe, einem Hauptgetriebe als Grundgetriebe und einer Bereichsgruppe als Ausgangs- oder Nachschaltgetriebe bekannt. Die Bauweise des bekannten Mehrgruppengetriebes mit dem Eingangsgetriebe und dem Hauptgetriebe ermöglicht die Schaltung eines Direktganges als einen Zwischengang während eines Gangwechsels. Dazu wird temporär eine direkte Verbindung einer Eingangswelle des Eingangsgetriebes mit einer Hauptwelle des Hauptgetriebes mittels einer Lastschaltkupplung hergestellt. Dadurch werden das Hauptgetriebe und die Splittergruppe lastfrei, so dass der eingelegte Gang ausgelegt, das Getriebe synchronisiert und der Zielgang eingelegt werden kann. Die Lastschaltkupplung überträgt dabei ein Motordrehmoment auf den Getriebeausgang, wobei ein freiwerdendes dynamisches Moment bei einer Drehzahlabsenkung zwischen Ursprungsgang und Zielgang genutzt wird, um den Zugkrafteinbruch weitgehend zu kompensieren. Die Lastschaltkupplung kann zwischen dem Eingangsgetriebe und dem Hauptgetriebe oder zwischen einer üblichen Anfahrkupplung und dem Eingangsgetriebe angeordnet sein. Die Übersetzung des Zwischenganges ist durch die Direktverbindung der Eingangswelle mit der Hauptwelle festgelegt. Die Anfahrkupplung kann beim Gangwechsel zwar eingerückt bleiben, ist aber als separates Anfahrelement weiterhin vorhanden.

Ferner ist aus der DE 198 44 783 C1 ein Verfahren zum Schalten eines Zahnräderwechselgetriebes mit formschlüssigen Zahnradkupplungen bekannt, bei dem über ein in das Wechselgetriebe integriertes Zahnräder-Synchronisiergetriebe, wahlweise mittels einer i > 1 übersetzten Zahnradstufe oder einer i < 1 übersetzten Zahnradstufe, eine Antriebsverbindung zwischen einer Getriebeeingangswelle und einer Getriebeausgangswelle herstellbar ist. Den Zahnradstufen ist jeweils eine Reibkupplung zugeordnet, die bei einem Gangwechsel eingesetzt werden, um die Drehzahl der Eingangswelle an die jeweilige Synchrondrehzahl anzupassen. Durch die Steuerung der Reibschlussverbindung zwischen der Eingangswelle und der Ausgangswelle und/oder des Antriebsmotors werden die Drehzahl der Eingangswelle einerseits und der Drehmomentverlauf an der Ausgangswelle beim Gangwechsel andererseits beeinflusst. Ein zwischen dem Antriebsmotor und der Eingangswelle angeordnetes reibschlüssiges Anfahrelement bleibt während des Gangwechsels eingerückt. Somit ist der Gangwechsel mit einer Lastschaltung vergleichbar. Das Verfahren kann durch einen geeigneten wechselnden Einsatz der Reibschlussverbindungen über die eine oder die andere Zahnradstufe des Synchronisiergetriebes bei Hoch- und Rückschaltungen im Zug- und Schubbetrieb eingesetzt werden.

Aus der EP 1 096 172 A2 ist ein automatisiertes Lastschaltgetriebe mit unsynchronisierten Gangschaltkupplungen bekannt. Zur Synchronisierung sind ebenfalls zwei Reibkupplungen vorgesehen. Eine gemeinsame Schwungscheibe ist als ein Kupplungseingangsteil zwischen einer Kurbelwelle des Antriebsmotors und einer Getriebeeingangswelle angeordnet. Die eine Synchronisierkupplung ist mit der niedrigsten Gangstufe gekoppelt und für Schubschaltungen sowie als Anfahrelement vorgesehen. Die andere Synchronisierkupplung ist mit der höchsten Gangstufe gekoppelt und für Zugschaltungen vorgesehen. Die Synchronisierkupplungen stehen einerseits über den Schub- bzw. Zugschaltgang mit einer Getriebeabtriebswelle und andererseits über das Kupplungseingangsteil mit der Getriebeeingangswelle in Verbindung. Die Synchronisierung bei einem Gangwechsel, d.h. die Drehzahlangleichung der Getriebeeingangswelle an die Drehzahl des Zielgangzahnradsatzes erfolgt durch Schließen oder Öffnen der Schub- bzw. Zugsynchronisierkupplung. Während einer Zugschaltung werden die Synchronisierkupplungen und die Gangschaltkupplungen in einer solchen Schaltabfolge betätigt, die eine Übertragung eines Antriebsmomentes auf die Getriebeabtriebswelle gewährleistet, so dass der Gangwechsel ohne Zugkraftunterbrechung erfolgt. Im Gegensatz zu bekannten zugkrafterhaltenden, sequenziell schaltenden Doppelkupplungsgetrieben ermöglicht dieses Getriebe auch Gangsprünge über mehrere Stufen.

Die beiden letzt genannten Druckschriften beschreiben jeweils ein Wechselgetriebe mit Lastschaltcharakteristik. Die darin beschriebenen Synchronisierkupplungen sind jeweils mit der niedrigsten bzw. höchsten Gangstufe des Wechselgetriebes gekoppelt. Diese Lösung kann jedoch nicht ohne weiteres auf mehrere im Kraftfluss hintereinander angeordnete Getriebegruppen eines Mehrgruppengetriebes und dessen Schaltabfolge übertragen werden.

Vor diesem Hintergrund liegt der Erfindung die Aufgabe zugrunde, ein Mehrgruppengetriebe und ein Verfahren zum Betrieb eines Mehrgruppengetriebes anzugeben, die mit möglichst einfachen, kostengünstigen und bauraumsparenden Mitteln zugkrafterhaltende Gangwechsel ermöglichen sowie einen hohen Schaltkomfort gewährleisten.

Die Lösung dieser Aufgabe ergibt sich aus den Merkmalen der unabhängigen Ansprüche, während vorteilhafte Ausgestaltungen und Weiterbildungen der Erfindung den zugeordneten Unteransprüchen entnehmbar sind.

Der Erfindung liegt die Erkenntnis zugrunde, dass mit einfachen Reibkupplungen als Lastschaltmittel an einem Eingangs-Wechselgetriebe sowie einer Zwischengangkupplung zur Überbrückung eines typischerweise unsynchronisierten Grundgetriebes alle möglichen Schaltfolgen bei Zughochschaltungen oder Zugrückschaltungen eines derart aufgebauten automatisierten Gruppen-Schaltgetriebes ohne Abkopplung des Antriebs zugkrafterhaltend durchführbar sind.

Demnach geht die Erfindung aus von einem Mehrgruppengetriebe eines Kraftfahrzeuges, mit wenigstens zwei in einem Antriebsstrang angeordneten Getriebegruppen, bei dem Mittel zur Zugkraftunterstützung bei Gangwechseln vorgesehen sind. Zur Lösung der gestellten Aufgabe sieht die Erfindung zudem vor, dass an einer als Zahnradgetriebe ausgebildeten Vorschaltgruppe mit einer ersten, einem Antriebsmotor zugewandten Gangkonstanten und einer zweiten, einer als Zahnradgetriebe ausgebildeten Hauptgruppe zugewandten Gangkonstanten, zwei Lastschaltkupplungen und eine Zwischengangkupplung angeordnet sind, wobei die erste Lastschaltkupplung eingangsseitig mit einer Antriebswelle des Antriebsmotors und ausgangsseitig mit einem Losrad der ersten Gangkonstanten verbunden ist, die zweite Lastschaltkupplung eingangsseitig mit der Antriebswelle und ausgangsseitig mit einem Losrad der zweiten Gangkonstanten verbunden ist, und die Zwischengangkupplung eingangsseitig mit dem Losrad der zweiten Gangkonstanten und ausgangsseitig mit einer mit einer Getriebeabtriebswelle zumindest wirkverbundenen Getriebehauptwelle der Hauptgruppe verbunden ist, wobei über die Zwischengangkupplung in Wirkverbindung mit wenigstens der zweiten Lastschaltkupplung ein Direktgang als ein Zwischengang schaltbar ist und über die erste und die zweite Lastschaltkupplung die Gangkonstanten der Vorschaltgruppe lastschaltbar sind.

Unter einem Gangwechsel wird ein Schaltvorgang verstanden, bei dem ein Ursprungsgang ausgelegt und ein Zielgang eingelegt wird, wobei auch der Spezialfall eingeschlossen ist, dass der Zielgang dem Ursprungsgang entspricht, also keine Übersetzungsänderung erfolgt. Eine Vorschaltgruppe wird auch als Splittergetriebe oder Splittergruppe (GV), eine Hauptgruppe auch als Hauptgetriebe oder Grundgetriebe (HG) und eine Nachschaltgruppe auch als Bereichsgetriebe oder Bereichsgruppe (GP) bezeichnet.

Weiterhin geht die Erfindung aus von einem Verfahren zum Betrieb eines Mehrgruppengetriebes eines Kraftfahrzeuges, mit wenigstens zwei in einem Antriebsstrang angeordneten Getriebegruppen, bei dem bei einem Gangwechsel zugkraftunterstützende Mittel aktiviert werden. Die gestellte Aufgabe bezüglich des Verfahrens wird dadurch gelöst, dass je nach eingelegtem Ursprungsgang und angewähltem Zielgang ein oder mehrere an dem Gangwechsel beteiligte Radsätze einer Vorschaltgruppe und einer Hauptgruppe, an denen Lastschaltkupplungen angeordnet sind, mittels einer Lastschaltung, bei der eine oder mehrere der Lastschaltkupplungen betätigt werden, unmittelbar lastgeschaltet werden, wobei eine Kraftflussverbindung zwischen einer Antriebswelle eines Antriebsmotors und einer abtriebsseitigen Getriebehauptwelle aufrechterhalten wird, und dass ein oder mehrere nicht lastschaltbare sowie an dem Gangwechsel beteiligte Radsätze mit Hilfe einer Zwischengangschaltung, bei der ein Direktgang geschaltet wird, über den eine direkte Kraftflussverbindung zwischen der Antriebswelle und der Getriebehauptwelle hergestellt wird, unter Zugkrafterhaltung lastfrei geschaltet werden.

Ein bevorzugtes Mehrgruppengetriebe mit den als Lastschaltkupplungen und der Zwischengangkupplung ausgebildeten erfindungsgemäßen zugkrafterhaltenden Mitteln weist drei im Kraftfluss hintereinander angeordnete Getriebegruppen auf, wobei die Vorschaltgruppe und die Hauptgruppe vorteilhaft in Vorgelegebauweise ausgebildet sind und eine Nachschaltgruppe als ein Planetengetriebe ausgebildet ist. Die Lastschaltkupplungen und die Zwischengangkupplung sind vorteilhaft als trockene oder nasse Reibkupplungen ausgebildet.

Vorzugsweise wird ein derartiges Getriebe mit zwei Vorgelegewellen konzipiert sein, so dass sich die Leistung entsprechend über zwei Vorgelegewellen verzweigt. Die Erfindung ist aber ebenso vorteilhaft bei Vorgelegewellengetrieben mit einer Vorgelegewelle anwendbar. Ebenso ist die erwähnte Nachschaltgruppe nur beispielhaft vorhanden, nicht aber notwendig.

Bei diesem Getriebe fungiert die Vorschaltgruppe als zweigängiges Splittergetriebe mit zwei Gangkonstanten, über welche die Gänge der Hauptgruppe alternierend variiert werden. Die sich daraus ergebenden Gänge multipliziert die Nachschaltgruppe anschließend wahlweise mit einer Planetenübersetzung. Somit ergibt sich mit einem beispielsweise dreigängigen Grundgetriebe eine Anzahl von n = n_{GV} x n_{HG} x n_{GP} = 2 x 3 x 2 = 12 Vorwärtsgängen.

Über die Lastschaltkupplungen an den Radsätzen der Splittergruppe ist diese lastschaltbar. Die Lastschaltkupplungen ersetzen die üblicherweise vorgesehenen Schalt- und Synchronisierelemente der Splittergruppe sowie ein separates Anfahrelement, was sich kostengünstig und bauraum- sowie gewichtsparend auswirkt. Schaltungen, bei denen nur die Gangkonstanten der Splittergruppe beteiligt sind, also insbesondere solche bei denen keine Schaltvorgänge im Grundgetriebe erfolgen, können damit in besonders kurzer Schaltzeit direkt lastgeschaltet werden. Um auch einzelne Schaltvorgänge im Hauptgetriebe direkt lastschalten zu können, können an den entsprechenden Radsätzen, beispielsweise an einem Radsatz eines 1. Ganges des Hauptgetriebes, weitere Lastschaltkupplungen angeordnet sein.

Bei allen anderen zugkraftunterstützten Schaltvorgängen, also bei Schaltungen von Radsätzen, für die keine Lastschaltkupplung vorhanden ist, ist eine Zwischengangschaltung vorgesehen. Bei der erfindungsgemäßen Zwischengangschaltung wird die Antriebswelle über die Lastschaltkupplung der zweiten, also der motorabgewandten Gangkonstanten der Splittergruppe, die am Losrad dieser Gangkonstanten angeordnet ist, und über die Zwischengangkupplung, die ebenfalls am Losrad der zweiten Gangkonstanten jedoch hauptgruppenseitig angeordnet ist, mit der abtriebsseitigen Hauptwelle des Getriebes verbunden. Die Direktverbindung zwischen Antriebswelle und Getriebehauptwelle kompensiert den Kraftfluss über die Vorgelegewellen, wodurch das Hauptgetriebe lastfrei und dadurch schaltbar wird.

Eine Zwischengangschaltung während eines Gangwechsels erfolgt vorzugsweise, indem die Zwischengangkupplung und die Lastschaltkupplung im schleifenden bzw. schlupfenden Zustand das Drehmoment des Antriebsmotors an der abtriebsseitigen Getriebehauptwelle abstützen, während die Drehzahl des Antriebsmotors an eine Synchrondrehzahl des Zielganges angepasst wird, der Ursprungsgang ausgelegt und bei Erreichen der Synchrondrehzahl der Zielgang eingelegt sowie der Zwischengang wieder geöffnet wird. Grundsätzlich ist dabei auch das zugkraftunterstütze Schalten von Mehrstufensprüngen möglich. Um die Zeit zur Herstellung der Drehzahlgleichheit von Antriebswelle und Zielgang zu verkürzen, kann, je nach aktuell eingelegtem Ursprungsgang, zusätzlich die Lastschaltkupplung der ersten, also der motorseitigen Gangkonstante im öffnenden oder schließenden Sinn angesteuert werden.

Im Falle, dass die Planeten des nachgeschalteten Bereichsgetriebes mit dem Sonnenrad und dem Hohlrad verblockt sind, also das Bereichsgetriebe mit der Drehzahl der Getriebehauptwelle umläuft, ist der Zwischengang der Direktgang des Gesamtgetriebes. Ein Umschalten der Bereichsgruppe während eines Gangwechsels ist jedoch nicht per se zugkraftunterstützt. Dies kann vorteilhaft dadurch erreicht werden, dass von vornherein weitere Lastschaltmittel am Bereichsgetriebe angeordnet sind, so dass eine lastschaltbare Bereichsumschaltung möglich ist. Der Zwischengang kann dann voll zugkraftunterstützt als Direktgang von Splittergruppe und Hauptgruppe, variiert mit der Bereichsübersetzung, also wahlweise als Direktgang oder übersetzter Gang geschaltet werden.

Es ist jedoch auch möglich, die Getriebehauptwelle einfach axial durch das Bereichsgetriebe bzw. die Nachschaltgruppe hindurchzuführen und direkt mit der Getriebeabtriebswelle zu verbinden. In diesem Fall ist der Zwischengang automatisch als Direktgang des Gesamtgetriebes ausgelegt. Ist keine Nachschaltgruppe vorgesehen, fungiert die Getriebehauptwelle gleichzeitig als Getriebeabtriebswelle bzw. ist mit dieser direkt, vorzugsweise einstückig, verbunden.

Durch die möglichen Lastschaltungen sowie die Zwischengangschaltung wird vorteilhaft bei allen Zugschaltungen eine signifikante Verringerung eines Geschwindigkeitsverlustes und somit eine Fahrleistungssteigerung erreicht sowie der Schalt- und Fahrkomfort erhöht. Da über den Zwischengang die zu synchronisierenden rotierenden Massen abgebremst werden können, kann die üblicherweise zur Abbremsung der Massen bei Hochschaltvorgängen vorgesehene Getriebebremse entfallen, wodurch weitere Kosten, Einbauraum und Gewicht eingespart bzw. reduziert werden. Zudem werden Schwingungen und Schaltschläge effektiv verringert, da der Antriebsstrang während des Gangwechsels durch den Zwischengang stets vorgespannt bleibt, wodurch eine zusätzliche Erhöhung des Schaltkomforts erreicht wird.

Zur Verdeutlichung der Erfindung ist der Beschreibung eine Zeichnung mit zwei Ausführungsbeispielen beigefügt. In dieser zeigt
Fig. 1 ein Getriebeschema eines automatisierten Mehrgruppengetriebes eines Kraftfahrzeuges mit Lastschaltung und Zwischengangschaltung, sowie
Fig. 2 ein Getriebeschema einer zweite Ausführungsform eines automatisierten Mehrgruppengetriebes eines Kraftfahrzeuges mit Lastschaltung und Zwischengangschaltung.

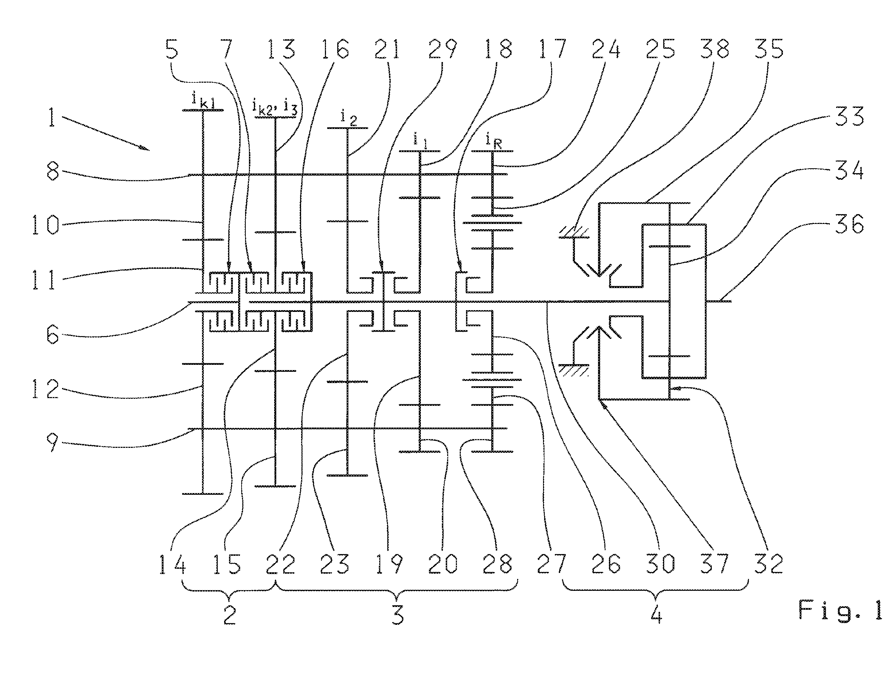

   Fig. 1 zeigt demnach ein als Zwei-Vorgelegewellen-Getriebe 1 ausgebildetes automatisiertes Mehrgruppengetriebe mit zwei parallelen, drehbar gelagerten Vorgelegewellen 8, 9 und drei hintereinander angeordneten Getriebegruppen 2, 3 und 4, wie es beispielsweise im Antriebsstrang eines Lastkraftwagens vorgesehen sein kann. Ein derartiges Getriebe ist an sich, also ohne Zugkraftunterstützung, insbesondere aus der Baureihe ZF-AS Tronic, und mit einer zugkraftunterstützenden Direktgangschaltung, jedoch mit nicht lastschaltbarer Vorschaltgruppe, aus der eingangs erwähnten DE 10 2006 024 370 A1 der Anmelderin bekannt.
   Die erste, motorseitig angeordnete Getriebegruppe 2 ist als ein zweigängiges Splittergetriebe ausgebildet. Die zweite, zentrale Getriebegruppe 3 ist durch ein dreigängiges Haupt- oder Grundgetriebe gebildet. Als dritte, abtriebsseitige Getriebegruppe 4 ist ein nachgeschaltetes, zweigängiges Bereichsgetriebe angeordnet.
   Das Splittergetriebe 2 weist zwei Gangkonstanten iₖ₁, iₖ₂ auf, die jeweils ein auf der ersten Vorgelegewelle 8 und auf der zweiten Vorgelegewelle 9 drehfest angeordnetes Festrad 10, 12 bzw. 13, 15 umfassen, die mit einem Losrad 11 bzw. 14 kämmen. Die erste Gangkonstante iₖ₁ ist einem nicht dargestellten Antriebsmotor und die zweite Gangkonstante iₖ₂ dem Hauptgetriebe 3 zugewandt angeordnet. Zur Schaltung der beiden Gangkonstanten iₖ₁ und iₖ₂ ist jeweils eine als Reibkupplung ausgebildete Lastschaltkupplung 5 bzw. 7 angeordnet, über welche die Losräder 11 bzw. 14 wahlweise drehfest mit einer Antriebswelle 6 des Antriebsmotors verbindbar sind. Diese beiden Lastschaltkupplungen 5 und 7 sind koaxial zur Antriebswelle 6 zwischen den Losrädern 11 und 14 nach innen zeigend angeordnet, wobei sie eingangsseitig mit der Antriebswelle 6 und ausgangsseitig mit dem jeweils zugehörigen Losrad 11 bzw. 14 verbunden sind.
   Über diese Lastschaltkupplungen 5, 7 ist das Splittergetriebe 2 lastschaltbar, d.h. die Gangkonstanten iₖ₁, iₖ₂ sind ohne Antriebsunterbrechung umschaltbar. Die Lastschaltkupplungen 5, 7 sind zudem als Anfahrelement ansteuerbar und betreibbar. Weiterhin ist nach axial außen, zum Hauptgetriebe 3 hin zeigend, eine ebenfalls als Reibkupplung ausgebildete Zwischengangkupplung 16 angeordnet. Die Zwischengangkupplung 16 ist eingangsseitig mit dem Losrad 14 der zweiten Gangkonstante iₖ₂ und ausgangsseitig mit einer abtriebsseitigen zentralen Getriebehauptwelle 30 verbunden.
   Das Hauptgetriebe 3 weist drei Vorwärtsgangradsätze i₁, i₂ und i₃ sowie einen Rückwärtsgangradsatz i_{R} auf. Der erste Hauptgetriebegang i₁ und der zweite Hauptgetriebegang i₂ umfassen jeweils zwei Festräder 18, 20 bzw. 21, 23 und ein Losrad 19 bzw. 22. Der dritte Hauptgetriebegang i₃ ist gemeinsam mit der zweiten Gangkonstante iₖ₂ des Splittergetriebes 2 realisiert. Der Rückwärts-Gangradsatz i_{R} umfasst zwei Festräder 24, 28, ein Losrad 26 und zwei drehbar gelagerte Zwischenräder 25, 27 zur Drehrichtungsumkehr, die einerseits mit dem jeweils zugehörigen Festrad 24 bzw. 28 und andererseits mit dem Losrad 26 kämmen.
   Zur Schaltung des ersten Hauptgetriebeganges i₁ und des zweiten Hauptgetriebeganges i₂ ist eine unsynchronisierte Klauen-Schalteinrichtung 29 vorhanden, über welche die zugehörigen Losräder 19 bzw. 22 wahlweise drehfest mit der Getriebehauptwelle 30 verbindbar sind. Die Schaltung des dritten Hauptgetriebeganges i₃ erfolgt über die Zwischengangkupplung 16, über die das Losrad 14 der zweiten Gangkonstante iₖ₂ drehfest mit der Getriebehauptwelle 30 verbindbar ist. Der Rückwärts-Gangradsatz i_{R} verfügt über eine eigene Klauen-Schalteinrichtung 17, über die das zugehörige Losrad 26 drehfest mit der Getriebehauptwelle 30 verbindbar ist.
   Das nachgeschaltete Bereichsgetriebe 4 ist als ein Planetengetriebe ausgebildet. Darin ist ein Planetenradsatz 32 von einem Planetenradträger 33 geführt. Die Planetenräder kämmen einerseits mit einem zentralen Sonnenrad 34 und andererseits mit einem äußeren Hohlrad 35. Das Sonnenrad 34 ist mit der Getriebehauptwelle 30 verbunden. Der Planetenradträger 33 ist wiederum mit einer Getriebeabtriebswelle 36 verbunden.
   Zur Schaltung des Bereichsgetriebes 4 ist eine Schalteinrichtung 37, vorteilhaft mit Synchronisierung, angeordnet. Diese Schalteinrichtung 37 verbindet in einer ersten Schaltstellung das Hohlrad 35 mit einem Gehäuse 38, so dass die Planetenräder zwischen dem Hohlrad 35 und dem Sonnenrad 34 umlaufen und die Getriebeabtriebswelle 36 entsprechend der Übersetzung über den Planetenradträger 33 gleichsinnig mit der Getriebehauptwelle 30 angetrieben wird. In einer zweiten Schaltstellung wird das Hohlrad 35 mit dem Planetenradträger 33 verblockt, so dass das Planetengetriebe 4 und damit die Getriebeabtriebswelle 36 direkt mit der Drehzahl der Getriebehauptwelle 30 rotiert.
   Aus der Kombination der Getriebegruppen 2, 3 und 4 des dargestellten Getriebeschemas ergeben sich insgesamt 2 x 3 x 2 = 12 Gänge. Der Kraftfluss des Getriebes 1 verzweigt sich nach einer Schaltfolge, bei der, beginnend mit dem 1. Gang im Hauptgetriebe 3, zunächst alternierend das Splittergetriebe 2 und das Hauptgetriebe 3 durchgeschaltet werden, so dass nacheinander 2 x 3 = 6 Gänge eines unteren Gangbereichs "1. Gang bis 6. Gang" geschaltet werden. Ist der 6. Gang erreicht, schaltet das Bereichsgetriebe 4 um, und es werden erneut das Hauptgetriebe 3 und das Splittergetriebe 2 alternierend durchgeschaltet, so dass wiederum 2 x 3 = 6 Gänge, nun aber in einem oberer Gangbereich "7. Gang bis 12. Gang", geschaltet werden.
   Bei der Schaltung des 5. Ganges bzw. des 11. Ganges wird der 3. Hauptgetriebegang i₃ über die Zwischengangkupplung 16 und die Lastschaltkupplung 5 der ersten Gangkonstante iₖ₁ geschaltet. Bei der Schaltung des 6. Ganges bzw. des 12. Ganges (6. Gang + Bereichsgruppe 4 geschaltet) wird der 3. Hauptgetriebegang i₃ über die Zwischengangkupplung 16 und die Lastschaltkupplung 7 der zweiten Gangkonstante iₖ₁ geschaltet. Diese Schaltung entspricht dem Direktgang, der auch als Zwischengang verwendet wird, wobei die Antriebswelle 6 direkt mit der Getriebehauptwelle 30 bzw. der Getriebeabtriebswelle 36 verbunden ist. Der Direktgang bzw. Zwischengang ist in diesem Fall gleichzeitig als der höchste Getriebegang (bei Einbeziehung der Bereichsgruppe 4) ausgelegt. Sind jedoch der 11. Gang und der 12. Gang als Schnellgänge mit einer Übersetzung i < 1 ausgelegt, kann die Schaltabfolge so geändert werden, dass bereits der 10. Gang (5. Gang + Bereichsgruppe 4 geschaltet) über die Zwischengangkupplung 16 und die Lastschaltkupplung 7 der zweiten Gangkonstante iₖ₂ geschaltet wird und somit als Direktgang bzw. Zwischengang ausgelegt ist.
   Schließlich schaltet das Splittergetriebe 2 auch die Rückwärtsgang-Übersetzung i_{R} alternierend, so dass zudem zwei Rückwärtsgänge zur Verfügung stehen.

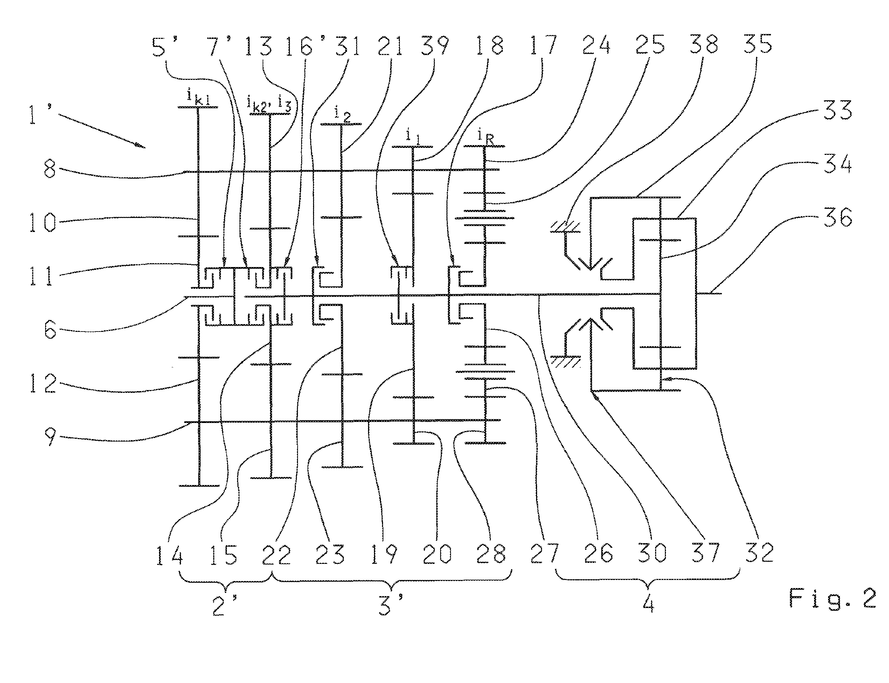

   Die Fig. 2 zeigt ein vergleichbares Zwei-Vorgelegewellen-Getriebe 1' mit einer der ersten Gangkonstanten iₖ₁ eines Splittergetriebes 2' zugeordneten Lastschaltkupplung 5' sowie einer der zweiten Gangkonstanten iₖ₂ zugeordneten Lastschaltkupplung 7' und einer Zwischengangkupplung 16'. Weiterhin ist eine zusätzliche Lastschaltkupplung 39 vorhanden, die am 1. Hauptgetriebegang i₁ eines Hauptgetriebes 3' angeordnet ist, wobei die Eingangsseite der Lastschaltkupplung 39 mit dem zugehörigen Losrad 19 und die Ausgangsseite mit der Getriebehauptwelle 30 verbunden ist. Dadurch kann auch der 1. Hauptgetriebegang i₁ in Wirkverbindung mit der Lastschaltkupplung 5' des Splittergetriebes 2' direkt lastgeschaltet werden, wodurch, unter Einbeziehung der Bereichsgruppe 4, zusätzlich der 1. Gang und der 7. Gang lastschaltbar sind.
   Ein erfindungsgemäßes Verfahren zum Betrieb des beschriebenen Mehrgruppengetriebes bei einem Gangwechsel beruht, je nach Schaltvorgang, im Wesentlichen auf einer Zwischengangschaltung mittels der Zwischengangkupplung 16, 16' und/oder einer Lastschaltung mittels einer oder mehrerer der Lastschaltkupplungen 5, 5', 7, 7', 39, wodurch die Zugkraft des Fahrzeugs erhalten bleibt.
   Demnach wird bei einer beispielhaften Zughochschaltung mit einem Schaltvorgang im Hauptgetriebe 3 bzw. 3' für eine Zuschaltung des Direktganges als Zwischengang die Zwischengangkupplung 16, 16' und die Lastschaltkupplung 7, 7' der zweiten Gangkonstanten iₖ₂ im Schlupf betrieben. Dadurch stützt sich das Motordrehmoment an der Getriebehauptwelle 30 bzw. direkt an der Getriebeabtriebswelle 36 ab. Folglich wird das Hauptgetriebe 3, 3' lastfrei und schaltbar. Die Motordrehzahl wird während der Momentenabstützung über die schleifenden Kupplungen 7, 7' und 16, 16' auf eine Synchrondrehzahl eines Zielgangs abgesenkt. Das bei der Drehzahlabsenkung freiwerdende Drehmoment wird zur Zugkrafterhaltung eingesetzt. Die Kupplung 5, 5' der ersten Gangkonstante iₖ₁ ist je nach eingelegtem Ursprungsgang (Ist-Gang) zusätzlich an der schnelleren Herstellung der Drehzahlgleichheit beteiligt. Bei Erreichen der Synchrondrehzahl erfolgt die Umschaltung vom Ursprungsgang in den Zielgang. Abschließend erfolgt, je nach Gangwechsel, das vollständige Öffnen bzw. vollständige Einrücken der Zwischengangkupplung 16, 16' und/oder der ersten bzw. zweiten Lastschaltkupplung 5, 5', 7, 7'.

### Bezugszeichenliste

- 1, 1 ': Zwei-Vorgelegewellen-Getriebe
- 2, 2': Vorschaltgruppe, Splittergetriebe
- 3, 3': Hauptgruppe, Hauptgetriebe
- 4: Nachschaltgruppe, Bereichsgetriebe
- 5, 5': Lastschaltkupplung
- 6: Antriebswelle
- 7, 7': Lastschaltkupplung
- 8: Vorgelegewelle
- 9: Vorgelegewelle
- 10: Festrad
- 11: Losrad
- 12: Festrad
- 13: Festrad
- 14: Losrad
- 15: Festrad
- 16, 16': Zwischengangkupplung
- 17: Schalteinrichtung
- 18: Festrad
- 19: Losrad
- 20: Festrad
- 21: Festrad
- 22: Losrad
- 23: Festrad
- 24: Festrad
- 25: Zwischenrad
- 26: Losrad
- 27: Zwischenrad
- 28: Festrad
- 29: Schalteinrichtung
- 30: Getriebehauptwelle
- 31: Schalteinrichtung
- 32: Planetenradsatz
- 33: Planetenradträger
- 34: Sonnenrad
- 35: Hohlrad
- 36: Getriebeabtriebswelle
- 37: Schalteinrichtung
- 38: Gehäuse
- 39: Lastschaltkupplung
- iₖ₁: Splittergetriebe-Gangkonstante
- iₖ₂: Splittergetriebe-Gangkonstante
- i₁: Hauptgetriebe-Gang
- i₂: Hauptgetriebe-Gang
- i₃: Hauptgetriebe-Gang
- i_{R}: Hauptgetriebe-Rückwärtsgang

## Patentansprüche

1. Mehrgruppengetriebe eines Kraftfahrzeuges, mit wenigstens zwei in einem Antriebsstrang angeordneten Getriebegruppen (2, 2', 3, 3'), bei dem Mittel zur Zugkraftunterstützung bei Gangwechseln vorgesehen sind, **dadurch gekennzeichnet, dass** an einer als Zahnradgetriebe ausgebildeten Vorschaltgruppe (2, 2') mit einer ersten, einem Antriebsmotor zugewandten Gangkonstanten (iₖ₁) und einer zweiten, einer als Zahnradgetriebe ausgebildeten Hauptgruppe (3, 3') zugewanden Gangkonstanten (iₖ₂), zwei Lastschaltkupplungen (5, 5', 7, 7') und eine Zwischengangkupplung (16, 16') angeordnet sind, wobei die erste Lastschaltkupplung (5, 5') eingangsseitig mit einer Antriebswelle (6) des Antriebsmotors und ausgangsseitig mit einem Losrad (11) der ersten Gangkonstanten (iₖ₁) verbunden ist, die zweite Lastschaltkupplung (7, 7') eingangsseitig mit der Antriebswelle (6) und ausgangsseitig mit einem Losrad (14) der zweiten Gangkonstanten (iₖ₂) verbunden ist, und die Zwischengangkupplung (16, 16') eingangsseitig mit dem Losrad (14) der zweiten Gangkonstanten (iₖ₂) und ausgangsseitig mit einer mit einer Getriebeabtriebswelle (36) zumindest wirkverbundenen Getriebehauptwelle (30) der Hauptgruppe (3, 3') verbunden ist, wobei über die Zwischengangkupplung (16, 16') in Wirkverbindung mit wenigstens der zweiten Lastschaltkupplung (7, 7') ein Direktgang als ein Zwischengang schaltbar ist, und über die erste und die zweite Lastschaltkupplung (5, 5', 7, 7') die Gangkonstanten (iₖ₁, iₖ₂) der Vorschaltgruppe (2, 2') lastschaltbar sind.

2. Mehrgruppengetriebe nach Anspruch 1, **dadurch gekennzeichnet, dass** die Vorschaltgruppe (2, 2'), die Hauptgruppe (3, 3') und eine Nachschaltgruppe (4) im Kraftfluss hintereinander angeordnet sind, wobei die Vorschaltgruppe (2, 2') sowie die Hauptgruppe (3, 3') in Vorgelegebauweise mit wenigstens einer gemeinsamen Vorgelegewelle (8, 9) ausgebildet sind, und die Nachschaltgruppe (4) als Planetengetriebe ausgebildet ist.

3. Mehrgruppengetriebe nach Anspruch 1 oder 2, **dadurch gekennzeichnet, dass** wenigstens eine weitere Lastschaltkupplung (39) vorgesehen ist, die an einem Gang (i₁) der Hauptgruppe (3') angeordnet ist.

4. Mehrgruppengetriebe nach einem der Ansprüche 1 bis 3, **dadurch gekennzeichnet, dass** die Lastschaltkupplungen (5, 5', 7, 7', 39) und die Zwischengangkupplung (16, 16') als Reibkupplungen ausgebildet sind.

5. Mehrgruppengetriebe nach einem der Ansprüche 1 bis 4, **dadurch gekennzeichnet, dass** die Getriebehauptwelle (30) direkt mit der Getriebeabtriebswelle (36) verbunden ist.

6. Mehrgruppengetriebe nach einem der Ansprüche 1 bis 5, **dadurch gekennzeichnet, dass** die Nachschaltgruppe (4) lastschaltbar ausgebildet ist.

7. Mehrgruppengetriebe nach einem der Ansprüche 1 bis 6, **dadurch gekennzeichnet, dass** die Getriebehauptwelle (30) durch die Nachschaltgruppe (4) axial hindurchgeführt ist.

8. Verfahren zum Betrieb eines Mehrgruppengetriebes eines Kraftfahrzeuges, mit wenigstens zwei in einem Antriebsstrang angeordneten Getriebegruppen (2, 2', 3, 3'), bei dem bei einem Gangwechsel zugkraftunterstützende Mittel aktiviert werden, **dadurch gekennzeichnet, dass** je nach eingelegtem Ursprungsgang und angewähltem Zielgang ein oder mehrere an dem Gangwechsel beteiligte Radsätze (iₖ₁, iₖ₂, i₁) einer Vorschaltgruppe (2, 2') und einer Hauptgruppe (3, 3'), an denen Lastschaltkupplungen (5, 5', 7, 7', 39) angeordnet sind, mittels einer Lastschaltung, bei der eine oder mehrere der Lastschaltkupplungen (5, 5', 7, 7', 39) betätigt werden, unmittelbar lastgeschaltet werden, wobei eine Kraftflussverbindung zwischen einer Antriebswelle (6) eines Antriebsmotors und einer abtriebsseitigen Getriebehauptwelle (30) aufrechterhalten wird, und dass ein oder mehrere nicht lastschaltbare sowie an dem Gangwechsel beteiligte Radsätze (i₁, i₂, i₃) mit Hilfe einer Zwischengangschaltung, bei der ein Direktgang geschaltet wird, über den eine direkte Kraftflussverbindung zwischen der Antriebswelle (6) und der Getriebehauptwelle (30) hergestellt wird unter Zugkrafterhaltung lastfrei geschaltet werden.

9. Verfahren nach Anspruch 8, **dadurch gekennzeichnet, dass** bei einer Zwischengangschaltung während eines Gangwechsels eine Zwischengangkupplung (16, 16') und eine Lastschaltkupplung (7, 7'), die an einer der Hauptgruppe (3, 3') zugewandten Gangkonstanten (iₖ₂) der Vorschaltgruppe (2, 2') angeordnet sind, im schlupfenden Zustand das Motormoment des Antriebsmotors an der abtriebsseitigen Getriebehauptwelle (30) abstützen, während die Drehzahl des Antriebsmotors an eine Synchrondrehzahl des Zielganges angepasst wird, der Ursprungsgang ausgelegt und bei Erreichen der Synchrondrehzahl der Zielgang eingelegt und der Zwischengang wieder geöffnet wird.

10. Verfahren nach Anspruch 8 oder 9, **dadurch gekennzeichnet, dass** bei der Synchronisierung zusätzlich eine einer motorseitigen Gangkonstanten (iₖ₁) der Vorschaltgruppe (2, 2') zugehörige Lastschaltkupplung (5, 5') diese öffnend oder schließend angesteuert wird.
